# EUROPÄISCHE PATENTANMELDUNG

(11) **EP 1 435 275 A1**
(43) Veröffentlichungstag der Anmeldung: **07.07.2004**
(21) Anmeldenummer: 03026949.2
(22) Anmeldetag: 25.11.2003
(51) Int. Cl.: B23P 21/00

(54) **Montagesystem**

(30) Priorität: 30.12.2002 DE 10261379
(71) Anmelder: BSH Bosch und Siemens Hausgeräte GmbH, 81739 München (DE)
(72) Erfinder: Dittes, Achim, 75059 Zaisenhausen (DE); Warmuth, Stefan, 75015 Bretten (DE)

(57) **Zusammenfassung**

Ein Montagesystem insbesondere für Küchengeräte soll flexibler gestaltet werden. Daher wird ein Montagesystem mit mehreren Modulen (1, 21, 22), die jeweils ein Montageband zur Aufnahme von zu fertigenden Bauteilen (3) aufweisen, und die zu einer Montagelinie aneinandergereiht sind, vorgeschlagen, welches mit einer Steuervorrichtung, mit der die mehreren Module (1, 21, 22) zentral mittels eines Bussystems steuerbar sind, versehen ist. Jeweils zwei der mehreren Module (1, 21, 22) sind durch eine Steckverbindungseinrichtung aneinander und damit an das Bussystem koppelbar. Damit lässt sich der Transport der zu fertigenden Bauteile gegebenenfalls mit entsprechender Sensorik in geeigneter Weise steuern.

## Beschreibung

Die vorliegende Erfindung betrifft ein Montagesystem mit mehreren Modulen, die jeweils ein Montageband zur Aufnahme von zu fertigenden Bauteilen aufweisen und die zu einer Montagelinie aneinandergereiht sind.

Zur Produktion von Küchengeräten, insbesondere Wandessen, haben sich Montagelinien als vorteilhaft erwiesen. Das zu fertigende Bauteil wird entlang dieser Montagelinie transportiert, und an beiden Seiten der Montagelinie führen mehrere Personen einzelne, spezifische Fertigungsschritte durch. Für die Ausführung jedes Fertigungsschritts ist das zu fertigende Bauteil für eine gewisse Zeit bei der betreffenden Person während seines Transports zu halten.

Aus der deutschen Offenlegungsschrift DE 40 40 090 A1 ist ein derartiges Montagesystem bekannt. Es ist ein lineares Montagesystem mit Paletten zur Aufnahme zu montierender Bauteile und mit einem Antrieb zur Fortbewegung der Paletten längs einer Montagebahn sowie mit einer Vorrichtung zur Rückführung der Paletten längs einer Rücktransportbahn zum Beginn der Montagebahn beschrieben. Die Palettenwechselzeit soll sehr stark herabgesetzt werden. Außerdem soll es möglich sein, bei Bedarf in sehr kurzer Zeit neue Bearbeitungsstationen zwischen schon bestehende einzufügen. Die Montagebahn und die Rücktransportbahn sind in gleich lange Module unterteilt, wobei eine Palette oder mehrere Paletten gemeinsam die Länge eines Moduls haben. Der Montagebahn ist eine Absenkvorrichtung nachgeschaltet, die eine Palette nach der anderen auf die Rücktransportbahn absenkt. Der Montagebahn ist ein Aufzug vorgeschaltet, der eine Palette nach der anderen am Ende der Rücktransportbahn vor dem Beginn der Montagebahn anhebt.

Des Weiteren ist aus dem deutschen Gebrauchsmuster DE 91 06 384 U1 ein Transportsystem bekannt, bei dem für jeden Wegabschnitt eine eigene Steuereinheit vorgesehen ist. Die Steuereinheiten benachbarter Wegabschnitte kommunizieren in bidirektionaler Weise miteinander, um die zu transportierenden Gegenstände von dem Transportmittel des einen Wegabschnitts auf dasjenige des in Transportrichtung angrenzenden Wegabschnitts zu überführen. Sämtliche Steuereinheiten sind untereinander identisch und gleichberechtigt, d.h. es gibt keinen Master. Eine bestehende Transportanlage kann um ein oder mehrere Antriebe beziehungsweise Transportmittel ergänzt oder verkürzt werden, ohne dass eine neue Steuerung erstellt werden müsste.

Die Aufgabe der vorliegenden Erfindung besteht darin, ein Montagesystem, bei dem ein Montageband als Werkstückträger dient, flexibler zu gestalten.

Erfindungsgemäß wird diese Aufgabe gelöst durch ein Montagesystem mit mehreren Modulen, die jeweils ein Montageband zur Aufnahme von zu fertigenden Bauteilen aufweisen und die zu einer Montagelinie aneinander gereiht sind, und einer Steuervorrichtung, mit der die mehreren Module zentral mittels eines Bussystems steuerbar sind, wobei zwei der mehreren Module jeweils durch eine Steckverbindungseinrichtung aneinander und damit an das Bussystem ankoppelbar sind.

Die Montagelinie kann so mit einer "zentralen Intelligenz" bei beliebiger Modulzahl gesteuert werden. Bei einem handelsüblichen Bussystem kann das Montagesystem beispielsweise auf 30 Segmente pro Montagelinie bedingt durch die Leitungswiderstände bei 24 V Steuerleitungen erweitert werden. Darüber hinaus ist die Montagelinie mit diesem Bussystem an beliebige andere Systeme zu koppeln. So ist beispielsweise der Signalaustausch zwischen Elektroprüfstand und Montagelinie oder optoelektronische Überwachung einzelner Baugruppen beziehungsweise Module oder aber auch eine elektronische Schraubüberwachung möglich.

Vorteilhafterweise sind die einzelnen Module über Steckverbinder miteinander koppelbar, wobei die Steckverbindungseinrichtungen eine Verbindung von Strom- und/oder Luftleitungen zur Versorgung der einzelnen Module erlauben. Dies bedeutet, dass Strom, Luft und sonstige Betriebsmittel von einem Modul auf das andere übertragen werden können.

Die Montagelinie kann eine oder mehrere Drehstationen zur Aufnahme eines zu fertigenden Bauteils aus einer ersten Richtung und zur Abgabe des zu fertigenden Bauteils in eine zweite, von der ersten unterschiedlichen Richtung aufweisen. Eine derartige Drehstation gewährleistet beliebige Richtungswechsel und unterschiedliche Drehrichtungen. Durch die Drehstationen kann z.B. auf der Innenseite der Montagelinie produziert und auf der gegenüberliegenden Seite vorgerüstet werden. Beim Loswechsel wird beispielsweise über ein Bedienpult der Drehwinkel von 90° auf 270° geändert, die Mitarbeiter gehen auf die andere Seite der Montagelinie, und es kann ohne Rüstzeit weiter produziert werden.

Zusätzlich zu den linearen Modulen und den Drehstationen kann beispielsweise ein mobiles Gestell als weiteres Standardelement für die Montagelinie eingesetzt werden. Das Gestell kann aus einem Aluminiumprofil hergestellt sein und eine Arbeitsplatzbeleuchtung, ein Ablagetableau und eine Steckdose aufweisen. Es kann wahlweise an jedes lineare Modul mechanisch und elektrisch gekoppelt werden. Dadurch wird aus dem linearen Modul ein vollwertiger Arbeitsplatz. In der Steuereinheit können lineare Module entweder als Transportstrecke (Puffer) oder als Arbeitsplatz geschaltet werden. Die Drehstationen sind immer Transportstrecke beziehungsweise Pufferplatz.

Das Montageband umfasst vorzugsweise eine endlose Kunststoffkette beziehungsweise ein Kunststoffscharnierband. Dieses wird durch einen dezentralen Antrieb angetrieben und stellt günstigerweise auch gleichzeitig eine Fertigungsfläche dar. Damit kann auf spezielle Werkstückträger, wie beispielsweise Paletten, die aufwändig zu transportieren sind, verzichtet werden.

Die Steuervorrichtung wird vorzugsweise zur Transportüberwachung verwendet, so dass ein Transport nur erfolgt, wenn auf einem bestimmten Modul der Fertigungsschritt beendet und das benachbarte Modul frei ist. Zur Steuerung können beispielsweise Lichttaster eingesetzt werden, die je nach Justierung das Werkstück an beliebiger Stelle des Moduls stoppen.

Durch minimierte Übergangsstellen zwischen den linearen Modulen und den Drehstationen kann die minimale Werkstückbreite beispielsweise auf 250 mm reduziert werden. Hinsichtlich Höhe, Tiefe und maximaler Breite bestehen jedoch keine Einschränkungen.

Vorteilhafterweise ist mindestens eines der Module, d.h. ein lineares Modul beziehungsweise eine Drehstation, elektromotorisch, hydraulisch oder pneumatisch höhenverstellbar. Günstig ist es, wenn diese Höhenverstellung stufenlos erfolgen kann. Somit läßt sich die Montagelinie an unterschiedlichste Fertigungsprozesse und ergonomische Anforderungen flexibel anpassen.

Durch den modularen Aufbau des Montagesystems und die Steckverbindungen für die Ansteuerungen kann eine Montagelinie binnen kürzester Zeit, z.B. 20 bis 30 Minuten in Länge und Richtung komplett umgebaut werden. Bei einem Defekt kann im Gegensatz zu starren Montagelinien ein einzelnes Segment beispielsweise in fünf Minuten ausgetauscht werden. Die Produktion kann dann unmittelbar weitergeführt und das entfernte, defekte Segment repariert werden. Es ist damit eine extrem hohe Flexibilität in der Anordnung, Ausstattung, Montagerichtung und Erweiterbarkeit beziehungsweise Kürzung der Linie gemäß einem Baukastensystem möglich.

Die modulare, zentral gesteuerte Montagelinie ist beispielsweise durch eine Kameraüberwachung aufrüstbar. Damit lassen sich Schraubvorgänge zählen und Etiketten oder Bauteile auf Position überprüfen sowie die Steuerung der Montagelinie beeinflussen.

Die vorliegende Erfindung wird nun anhand der beigefügten Zeichnungen näher erläutert, in den zeigen:
- Figur 1: eine Draufsicht auf ein erfindungsgemäßes Montagesystem;
- Figur 2: eine Draufsicht auf ein alternatives Montagesystem; und
- Figur 3: eine Draufsicht auf ein weiteres, alternatives Montagesystem.

Die nachfolgend beschriebenen Ausführungsformen stellen bevorzugte Ausführungsbeispiele der vorliegenden Erfindung dar.

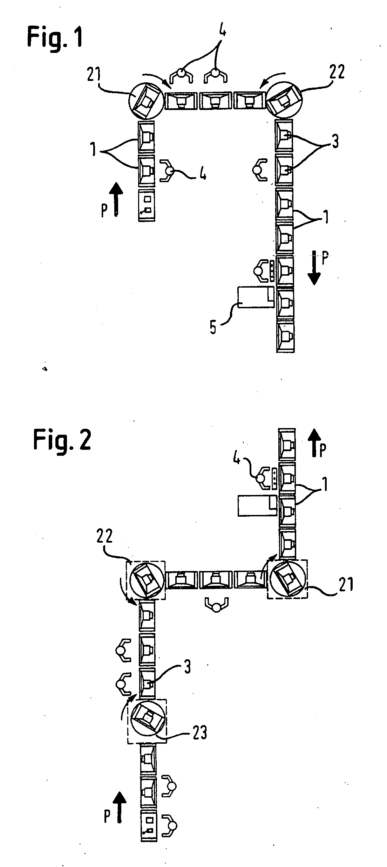

Figur 1 zeigt eine Draufsicht auf eine annähernd U-förmige Montagelinie. Sie weist eine Vielzahl linearer Module 1 und zwei Drehstationen 21 und 22 auf. Die Transportrichtung ist durch die Pfeile P angedeutet. Auf jedem Modul 1, 21, 22 befindet sich eine zu fertigende Wandesse 3. Mitarbeiter 4 führen an der Montagelinie verschiedene Fertigungsschritte durch.

Zu Beginn der Montagelinie sind die Wandessen 3 bezogen auf die U-Form der Montagelinie nach außen gerichtet, d.h. die Öffnung der Wandesse weist nach außen. Ein Mitarbeiter 4 führt einen Fertigungsschritt am Kopf der Wandesse, d.h. an dem der Öffnung der Wandesse gegenüberliegenden Ende, durch. Über ein weiteres lineares Modul wird die Wandesse zu der Drehstation 21 befördert. Diese ist im vorliegenden Fall rechtsdrehend, so dass die in dem rechts anschließenden Schenkel der Montagelinie weitertransportierten Wandessen 3 ebenfalls nach außen weisen. Zwei Mitarbeiter 4, die an der Außenseite des Montagesystems platziert sind, führen Fertigungsschritte an den ihnen zugewandten Wandessen durch. Am Ende dieses Schenkels der Montagelinie ist eine weitere Drehstation 22 angeordnet. Da die Wandessen 3 für die weiteren Fertigungsschritte nach innen weisen müssen, ist die Drehstation 22 linksdrehend eingestellt. Sie nimmt die jeweilige Wandesse auf, dreht um 90° nach links, d.h. gegen den Uhrzeigersinn, und gibt die Wandesse 3 an den anschließenden Schenkel der Montagelinie ab. Dort sitzen zwei Mitarbeiter an der Systeminnenseite und führen ihre spezifischen Fertigungsschritte an den ihnen zugewandten Wandessen durch. Am Ende der Fertigungsstraße beziehungsweise der Montagelinie ist ein Prüfplatz 5 vorgesehen.

Die einzelnen Module, nämlich Linearmodule 1 und Drehstationen 21 und 22, (im Anwendungsfall 14 Stück) werden vom Prinzip her wie Eisenbahnwaggons hintereinander gekoppelt und über Steckverbindungen mit Strom-, Steuer- und Luftleitungen versorgt. In bevorzugter Ausführungsform sind die Segmente beziehungsweise Module 1 1200 mm breit, 850 mm hoch und 650 mm tief. Sie sind zum raschen Austausch beziehungsweise Umbau ohne Hilfsmittel wie Stapler, Hubwagen etc. auf Rädern fahrbar. In der gewünschten Position sind sie mit einer Feststellspindel fixierbar. Jedes Modul 1, 21, 22 hat einen eigenen separaten dezentralen Antrieb, mit dem ein Endlosgurt, bestehend aus einem Kunststoffscharnierband, angetrieben wird. Die Drehstationen 21 und 22 sind auch mit einem Endlosgurt als Transportmittel versehen, der die gleiche Breite besitzt wie der Endlosgurt der linearen Module 1. Die Drehstationen 21 und 22 sind ebenfalls fahrbar und an die linearen Module durch Steckverbinder koppelbar. Die einzelnen Segmente werden von einer nicht dargestellten, zentralen Steuereinheit (Profibus) angewählt und je nach Anzahl der Mitarbeiter oder des Arbeitsinhaltes des zu produzierenden Geräts als Arbeitsplatz oder Pufferstrecke kodiert. Segmente beziehungsweise Module am Bandanfang oder -ende können auch komplett ausgeschaltet werden.

Eine alternative Form der Montagelinie ist in der Draufsicht von Figur 2 dargestellt. Wiederum besteht die Montagelinie aus drei Schenkeln, von denen jeweils zwei zueinander senkrecht stehen. Die Verbindungspunkte der durch die linearen Module 1 gebildeten Schenkel stellen wiederum die Drehstationen 21 und 22 dar. In dem langen nach unten weisenden Schenkel von Figur 2 ist darüber hinaus eine dritte Drehstation 23 vorgesehen, die die Funktion besitzt, die Wandessen 3 für den weiteren Fertigungsprozess, der in Richtung der Pfeile P verläuft, um 180° zu drehen.

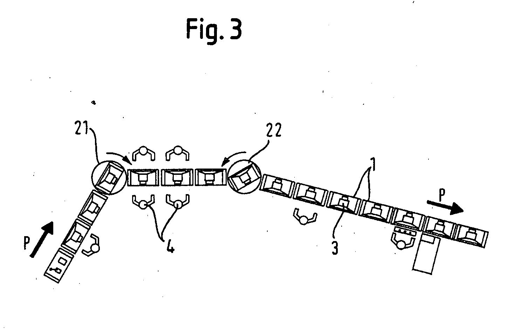

Eine dritte Ausführungsform der vorliegenden Erfindung ist in Figur 3 in Draufsicht dargestellt. Wiederum besteht die Montagelinie aus drei Schenkeln, die an den Drehstationen 21 und 22 miteinander verbunden sind. Bei dieser Variante sind die einzelnen Schenkel jedoch nicht im 90°-Winkel miteinander verbunden. Vielmehr wird durch diese Variante angedeutet, dass die Drehstationen 21 und 22 in einem beliebigen Winkel an die linearen Module 1 gekoppelt werden können. Dadurch läßt sich der für die Montagelinie zur Verfügung stehende Raum optimal ausnützen. In Figur 3 ist ferner angedeutet, dass die Mitarbeiter an der Montagelinie an bestimmten Modulen 1 einander gegenüber positioniert werden können, sofern dies der zur Verfügung stehende Raum und der Fertigungsprozess zulässt.

## Patentansprüche

1. Montagesystem mit
mehreren Modulen (1, 21, 22), die jeweils ein Montageband zur Aufnahme von zu fertigenden Bauteilen (3) aufweisen und die zu einer Montagelinie aneinander gereiht sind,
**gekennzeichnet durch**
eine Steuervorrichtung, mit der die mehreren Module zentral mittels eines Bussystems steuerbar sind, wobei zwei der mehreren Module (1, 21, 22) jeweils **durch** eine Steckverbindungseinrichtung aneinander und damit an das Bussystem ankoppelbar sind.

2. Montagesystem nach Anspruch 1, wobei über die Steckverbindungseinrichtung auch Strom- und/oder Luftleitungen zur Versorgung der einzelnen Module koppelbar sind.

3. Montagesystem nach Anspruch 1 oder 2, wobei jedes der mehreren Module über eine standardisierte Steuerleitung an externe Geräte anschließbar ist.

4. Montagesystem nach einem der Ansprüche 1 bis 3, wobei mindestens eines der mehreren Module (1, 21, 22) der Montagelinie eine Drehstation (21, 22) zur Aufnahme eines zu fertigenden Bauteils (3) aus einer ersten Richtung und Abgabe des zu fertigenden Bauteils (3) in eine zweite, von der ersten unterschiedlichen Richtung ist.

5. Montagesystem nach einem der Ansprüche 1 bis 4, wobei das Montageband eine endlose Kunststoffkette als Werkstückträger umfasst.

6. Montagesystem nach Anspruch 5, wobei das Montageband als Fertigungsfläche nutzbar ist.

7. Montagesystem nach einem der Ansprüche 1 bis 6, wobei die Steuervorrichtung zur Transportüberwachung verwendbar ist, so dass ein Transport von einem ersten zu einem zweiten Modul (1, 21, 22) nur erfolgt, wenn ein Fertigungsschritt auf dem ersten Modul beendet und das zweite Modul frei ist.

8. Montagesystem nach einem der Ansprüche 1 bis 7, wobei eines der mehreren Module (1, 21, 22) elektromotorisch, hydraulisch oder pneumatisch höhenverstellbar ist.
